# FASCICULE DE BREVET EUROPEEN

(11) **EP 3 278 206 B1**
(45) Date de publication et mention de la délivrance du brevet: **26.08.2020**
(21) Numéro de dépôt: 16718389.6
(22) Date de dépôt: 30.03.2016
(51) Int. Cl.: G06F 3/0488

(54) **PROCÉDÉ DE SÉLECTION D'UN ÉLÉMENT PARMI UN GROUPE D'ÉLÉMENTS AFFICHABLES SUR UNE PETITE SURFACE DE SAISIE.**
VERFAHREN ZUR AUSWAHL EINES ELEMENTES AUS EINER GRUPPE VON ELEMENTEN, DIE AUF EINER KLEINEN EINGABEOBERFLÄCHE ANZEIGBAR SIND
METHOD OF SELECTING AN ELEMENT FROM AMONG A GROUP OF ELEMENTS DISPLAYABLE ON A SMALL INPUT SURFACE

(30) Priorité: 02.04.2015 FR 1500673
(43) Date de publication de la demande: 07.02.2018
(73) Titulaire: Provost, Eric, 92320 Châtillon (FR)
(72) Inventeur: Provost, Eric, 92320 Châtillon (FR)
(86) Numéro de dépôt international: PCT/FR2016/000061
(87) Numéro de publication internationale: WO 2016/156680

(56) Documents cités:
- EP-A1- 2 806 334
- EP-A2- 2 284 673
- US-A1- 2002 101 441
- US-A1- 2012 227 012
- US-A1- 2015 040 056
- US-B1- 8 405 601

## Description

La présente invention concerne un procédé de sélection d'éléments parmi un groupe d'éléments affichables sur une petite surface de saisie du type téléphone portable, montre connectée ou tablette numérique. Le procédé permet la saisie des caractères de l'alphabet mais aussi de tous autres items, idéogrammes ou actions.

Il est d'usage d'utiliser un clavier virtuel pour la saisie de caractères qui sur de petits écrans apporte le problème de la promiscuité des touches virtuelles induisant de fausses saisies ou nécessitant l'usage d'un stylet et une attention particulière de la part de l'utilisateur pour la sélection d'un caractère. L'autre moyen usuel est de regrouper sous la forme d'un clavier de dix touches les lettres de l'alphabet et par appuis successifs sur ces touches de choisir le caractère attendu. Cette dernière méthode nécessite du temps et de la dextérité de la part de l'utilisateur à savoir synchroniser un nombre d'appuis de touche en un temps défini. Enfin les systèmes de saisie basés sur la reconnaissance de forme nécessitent plus ou moins d'apprendre les formes reconnaissables par l'appareil pour chaque lettre.

Il est divulgé dans D1 (US 8 405 601 B1, BEALE MARD IVOR JOHN [GB], 26 Mars 2013) un système de saisie de caractères basé sur des calculs de mouvements et un agencement de symboles à saisir organisés autour d'une zone centrale, servant de départ au processus. Toutefois ce système de saisie présente le défaut de devoir faire des calculs de mouvements, dont l'interprétation par une machine d'état n'est pas évidente sans réglages ; de plus cela supprime la possibilité à l'utilisateur de corriger son geste. Le système présenté ne permet pas de système correspondant à une molette simulée décuplant la possible sélection de caractère de même le principe de sélection rend difficile la sélection en continu sans rupture de contact.

Il est divulgé dans D5 (EP 2 806 334 A1 (SAMSUNG ELECTRONICS CO LTD [KR], 26 novembre 2014) l'acte de confirmer un choix (ici à travers un geste) en se déplaçant dans une région dédiée. Ce système présente toutefois de nécessaires calculs de détection de gestes particuliers.

Il est divulgé dans D6 (US 2015/040056 A1, CHO HYEON JOONG [KR], 5 Février 2015) un système de saisie basé sur la reconnaissance d'un tracé, ayant une courbure et une direction de tracé particulière mais aussi un clic. Par essence, ce système ne permet pas simplement une saisie multiple sans rupture de contact et pose là aussi le problème de l'interprétation d'un tracé par une machine d'état.

La présente invention a pour objet de remédier aux problèmes cités précédemment.

A cet effet, l'invention propose un dispositif pour sélectionner un élément parmi un groupe d'éléments selon la revendication 1, et un procédé de sélection d'éléments selon la revendication 6.

Avantageusement, le procédé selon l'invention permet de repousser les limites des tailles des écrans requises jusqu'à celle d'une montre pour effectuer une saisie, et apporte entre autres l'avantage de limiter la dextérité nécessaire à l'utilisateur pour effectuer une saisie.

Le procédé selon l'invention peut également comprendre une ou plusieurs des caractéristiques ci-dessous, considérées individuellement ou selon toutes les combinaisons techniquement possibles :
- si l'instrument de pointage prend contact avec l'écran en dehors d'une zone de saisie, glisse sur plusieurs zones de validation, alors sur préférence la première ou la dernière zone de validation pointée quand l'instrument de pointage pointera une zone centrale ou rompra le contact avec l'écran sera considérée comme la zone de validation choisie et validée et la zone de saisie choisie la zone de saisie incluant la zone de validation choisie, par ailleurs si l'instrument de pointage prend contact avec l'écran dans une zone de validation alors la zone de saisie à qui elle est associée est la zone de saisie choisie et la zone de validation pointée la zone de validation choisie ; et/ou
- l'instrument de pointage prend contact avec l'écran en zone de validation, puis glisse sur d'autres zones de validation avant d'entrer dans une zone centrale ou de rompre le contact avec l'écran, alors les éléments et groupes d'éléments ou sur option seulement le contenu de la première zone de saisie servent d'informations utilisables à l'élément contenu dans la dernière zone de validation, considérée zone de validation choisie et validée, lors de l'évaluation de ce dernier avec en zone de saisie choisie la zone de saisie qui inclut la zone de validation choisie ; et/ou
- la zone centrale d'une zone de saisie peut optionnellement contenir un élément ou une liste d'éléments sélectionnables indexés concomitamment en passant par zéro appelé liste, la sélection suivie de l'évaluation est faite par simple appui puis relâche de l'instrument de pointage sur cette zone centrale si l'élément est unique ou celui à l'index zéro de la liste, si l'instrument de pointage prend contact avec l'écran en zone de validation, appelée zone primaire de validation, ou était en zone centrale puis glisse en une zone de validation, alors dite primaire de validation, puis glisse sur une zone de validation voisine dans le sens dextrogyre ou lévogyre de la même zone de saisie qui contient la zone centrale contenant la liste, alors l'index associé à la zone centrale est incrémenté de un ou respectivement décrémenté de un si cette incrémentation ou décrémentation produit un index de la liste et ces opérations d'incrémentation ou de décrémentation d'index se poursuivent tant que l'instrument de pointage traverse les zones de validation d'une même zone de saisie et lorsque l'instrument de pointage entre en zone centrale ou rompt son contact avec l'écran, l'élément correspondant à l'index de la liste dans la zone centrale est évalué comme un élément unique, l'évaluation de l'élément unique se fait avec une zone de saisie choisie étant la zone de saisie contenant la zone centrale contenant la liste, de la même manière, que la zone centrale contienne ou non un ou des éléments, si la zone primaire de validation contient une commande dynamique qui a la capacité d'être évaluée à chaque incrémentation ou décrémentation de l'index pour transmettre ce changement à une application cible distante ou non du système, alors quelles que soient les valeurs minimum et maximum que peut avoir l'index, dès que l'instrument de pointage pointe en premier lieu, ou après avoir pointé une zone centrale, une zone primaire de validation contenant une commande dynamique, à chaque passage d'une zone de validation à une autre de la même zone de saisie, dans le sens dextrogyre ou lévogyre, la commande est évaluée avec en paramètre respectivement une incrémentation ou une décrémentation jusqu'au retour en zone centrale de l'instrument de pointage ou de sa rupture de contact avec l'écran, la commande dynamique de la zone primaire de validation qui est considérée alors zone de validation choisie et validée est alors évaluée comme un élément unique avec un paramètre de finalisation, la zone de saisie choisie est la zone de saisie associée à la zone de validation choisie ; et/ou
- la zone de saisie pointée en sa zone centrale va de façon paramétrable agrandir sa taille sur l'écran de telle sorte que les autres zones de saisies soient toujours pointables en leur zone centrale et la zone de saisie agrandie toujours complètement visible, cet agrandissement peut favoriser l'agrandissement des zones de validation en rétrécissant la zone centrale de la zone de saisie agrandie, jusqu'à la rupture du contact ou validation d'une zone de validation par pointage d'une zone centrale cet agrandissement est maintenu, puis retrouve sa taille d'origine ; et/ou
- l'agrandissement d'une zone de saisie peut sur paramétrage repousser les autres zones de saisie sur le bord de l'écran ou imposer une diminution paramétrable de la taille des autres zones de saisie essentiellement de leur zone périphérique de telle sorte d'être toujours pointables en leur zone centrale, à la fin de l'agrandissement de la zone de saisie, les autres zones de saisie retrouvent leurs positions et tailles d'origine, lorsque la zone de saisie réduit sa taille autour de sa zone centrale, les zones de validation réduisent donc leur taille de façon paramétrable et possiblement jusqu'à une taille nulle ; et/ou
- l'agrandissement d'une zone de saisie peut être paramétré de sorte à excentrer son centre et permet d'avoir toujours à l'écran les autres zones de saisies pointables en leur zone centrale, permettant alors d'agrandir au plus la zone de saisie sur tout l'écran tout en la laissant complètement lisible ; et/ou
- l'affichage des zones de saisie peut se faire en surimpression d'une application nécessitant la saisie, cette surimpression peut être de transparence réglable ou de couleurs contrastées en regard de l'image à l'écran recouverte ; et/ou
- l'affichage de l'invention en dehors de son utilisation dit de veille peut sur paramétrage se limiter au maximum pour laisser lisible une possible application nécessitant une saisie sur laquelle l'invention va s'afficher en surimpression, par exemple laisser simplement un masque quasiment transparent rappelant l'affichage des zones centrales ; et/ou
- sur paramétrage, il laisse apparaître les zones de validations réduites graphiquement au maximum pour laisser à l'utilisateur la possibilité d'utiliser les zones de validation au premier contact de l'instrument de pointage, par exemple ne laisser visible que le pourtour des zones de validation et laisser un trou en place de la zone centrale, cet affichage de veille est réactivé dès que l'invention n'est pas utilisée un temps paramétrable ; et/ou
- l'affichage du procédé de sélection d'éléments parmi un groupe d'éléments est caractérisé sur réglage par une première phase d'agrandissement de toutes les zones de validation ou d'opacification de l'apparence des zones de saisie lors du début de saisie sur la zone centrale et dans une seconde phase, lors du déplacement de l'instrument de pointage de l'agrandissement précédemment décrit de la zone de saisie ; et/ou
- lorsque l'instrument de pointage passe sur une zone de validation pouvant être validable, son apparence change de sorte à identifier la future zone de validation sélectionnée, toutes les autres zones de validation de la même zone de saisie prennent une apparence identique, dans le cas d'un pointage possible de plusieurs zones de validation, les zones de validation connues comme étant exploitables par les commandes affichées dans les zones de validation peuvent conserver une apparence dédiée, dès qu'il apparaît une zone de validation validée l'ensemble des zones de validation reprennent leur apparence à l'activation de l'invention ; et/ou
- au cours du choix d'une zone de validation, lorsque les zones de validation des zones de saisie réduites restent visibles et que le futur item sélectionné est un groupe d'éléments, alors la zone de saisie la plus proche de la zone de validation contenant ce futur item sélectionné peut changer le contenu de ses zones de validation en regard du groupe d'éléments et reprendre son apparence d'origine dans le cas où l'instrument de pointage change de zone de validation ; et/ou
- l'évaluation de l'élément sélectionné peut être transmise à des périphériques connectés par un lien sans fil (par exemple du type IEEE 802.15, IEEE 802.11...) ou physique du type lien série (par exemple du type USB, RS232...) ; et/ou
- une zone dédiée au retour de saisie pour validation de l'utilisateur soit remplie à partir d'une copie du résultat de l'évaluation de l'élément sélectionné ; et/ou
- la répartition des éléments et groupes d'éléments sur les zones de validation se fait en fonction des langues en privilégiant les lettres, symboles et actions les plus usités sous forme d'éléments uniques dans les zones de validation des zones de saisie préférentiellement éloignées des autres zones de saisies à l'activation de l'invention et les moins usitées sous forme de groupes d'éléments dans les zones de validation des zones de saisie voisine d'une autre zone de saisie à l'activation de l'invention ; et/ou
- les éléments de caractères peuvent se placer à l'activation de l'invention sur le pourtour des zones de saisie, dans les zones de validation n'ayant pas de zone de sélection en voisinage immédiat en ordre alphabétique reléguant les dernières lettres de l'alphabet si nécessaire dans une zone de validation voisine d'une zone de sélection sous la forme de groupe d'éléments ; et/ou
- les éléments pour la sélection des idéogrammes peuvent commencer par un groupe d'éléments représentant le nombre de traits utilisés dans l'idéogramme pour correspondre au dictionnaire ; et/ou
- les éléments pour la sélection des idéogrammes peuvent symboliser le premier trait dessiné qui correspondrait à des groupes d'éléments représentant le second trait eux mêmes constitués des groupes d'éléments du troisième trait s'il existe et ainsi de suite jusqu'à la saisie de l'élément correspondant à l'idéogramme.

### Description des dessins

L'invention sera mieux comprise à la lecture de la description qui va suivre donnée à titre d'exemple non limitatif de mise en œuvre de celle-ci, et à l'examen des figures annexées sur lesquelles :
- Fig 1 : exemple de zone de saisie.
   Légende : (a) zone de saisie pour les ordres
   (bx) zones de saisie pour les caractères
- Fig 2 : exemple de zone de saisie sur un écran
   Légende : (a) zone centrale de la zone de saisie (bx) zones de validation associées à la zone de saisie
- Fig 3 : exemple de réduction de la taille des zones de saisie Légende : (a') zone centrale de la zone de saisie réduite
- Fig 4 : exemple de zone de saisie agrandie.
   Légende : (a') zone centrale de la zone de saisie agrandie (bx') zones de validation associées à la zone de saisie agrandie
- Fig 5 : exemple de saisie sans agrandissement, étape 0
- Fig 6 : exemple de saisie sans agrandissement, étape 1
- Fig 7 : exemple de saisie sans agrandissement, étape 2
- Fig 8 : exemple de saisie sans agrandissement, étape 3
- Fig 9 : exemple de saisie sans agrandissement, étape 4
- Fig 10 : exemple de saisie avec agrandissement, étape 4
- Fig 11 : exemple de répartition des éléments avec des zones de saisie distinctes
- Fig 12 : exemple de système de saisie à une zone de saisie.
- Fig 13 : Saisie d'une commande de zone centrale à l'index 1 : ici configuration des éléments en majuscule non verrouillé. Le trait noir est le déplacement de l'instrument de pointage avec un gros cercle pour sa position en fin de trait.

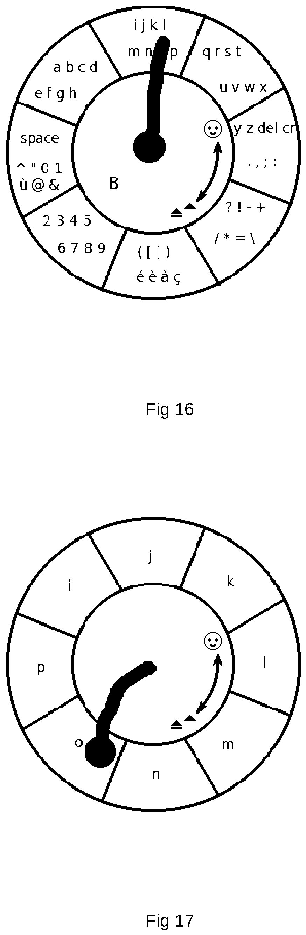

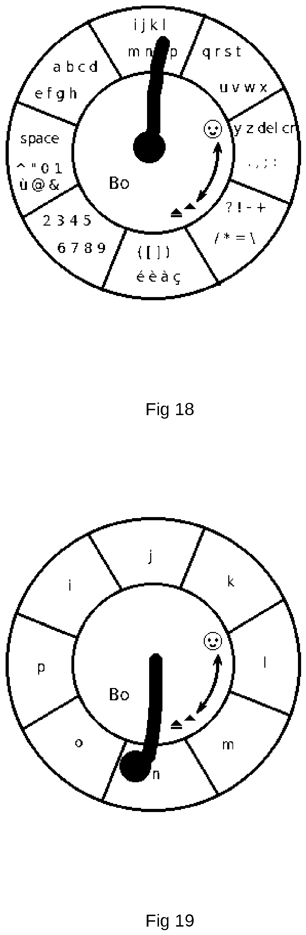

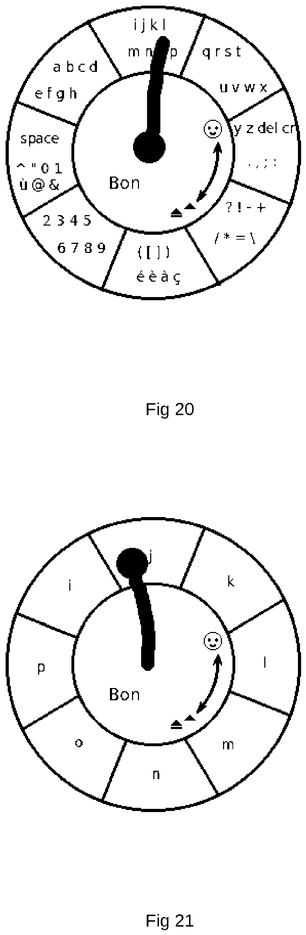

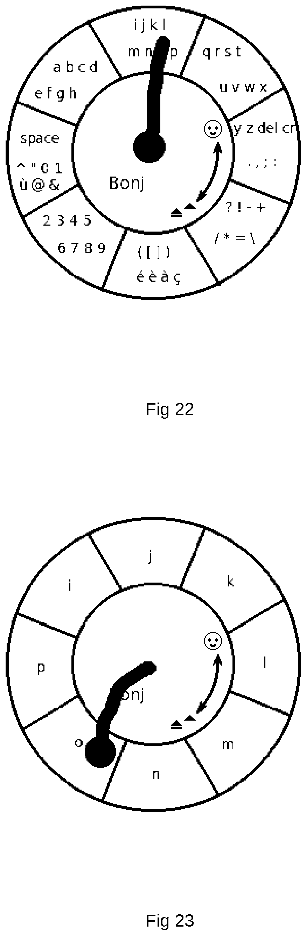

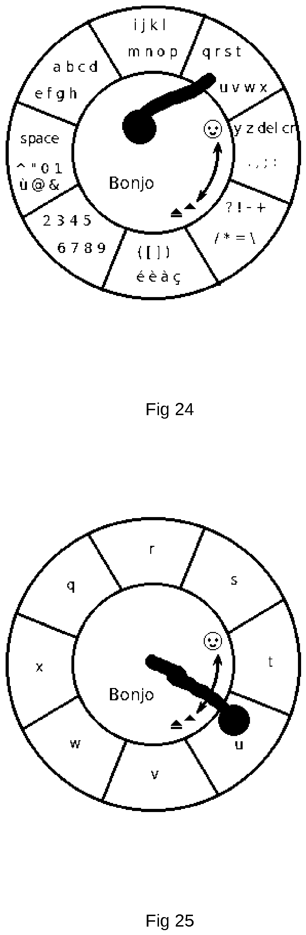

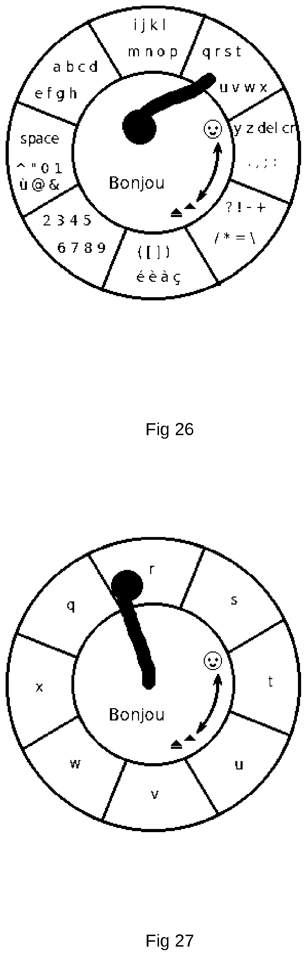

- Fig 14 à 29 : Étape de saisie du texte «Bonjour» et envoi. Le trait noir est le déplacement de l'instrument de pointage avec un gros cercle pour sa position en fin de trait à la fin de l'étape.

### Définitions

Elément : entité ayant une représentation graphique et étant saisissable, il est l'objet de la saisie. Exemples : lettre de l'alphabet, item de menu, ...
Groupe d'éléments : ensemble ou sous ensemble d'éléments saisissables.
Instrument de pointage : outil permettant le début et fin de la saisie d'une localisation sur l'écran évoluant au cours du temps.
Exemples : un appui, déplacement et levé d'un doigt sur un écran capacitif, un stylet sur un écran résistif.
Zone de saisie : elle est subdivisée en deux zones : une centrale strictement entourée par l'autre zone périphérique. Elle peut être de toutes formes mais pour l'exemple sera circulaire dans cet exposé.
Zone centrale : zone centrale de la zone de saisie recevant le début et fin de la saisie par l'instrument de pointage. Elle peut être de toutes formes mais pour l'exemple sera circulaire dans cet exposé.
Zone de validation : segmentation de la zone périphérique de la zone de saisie représentant les éléments ou groupe d'éléments saisissables. Elle peut être de toutes formes mais pour l'exemple dans cet exposé sera une part d'une couronne circulaire segmentée en 8 parts.
Saisie : Une saisie démarre principalement en zone centrale par un appui en son sein de l'instrument de pointage et se termine par l'arrêt de l'appui en tout endroit de l'écran. La saisie peut démarrer dans tout endroit autre qu'une zone centrale, ce qui dans ce cas nécessite un traitement particulier.
Item sélectionné : élément ou groupe d'éléments représenté par la dernière zone de validation parcourue par l'instrument de pointage sur la zone de saisie ayant dernièrement eu sa zone centrale parcourue par l'instrument de saisie.
Activation de l'invention : instant où la représentation graphique de l'invention apparaît pour la première fois à l'écran après une interruption de son usage. Il correspond à une configuration de référence dite de base.
Zone de retour de saisie : zone donnant un renvoi des précédents éléments saisis n'étant pas des actions.
   Exemple : caractères, items, idéogrammes, ...
Configuration didactique : configuration de l'invention de telle sorte que son usage nécessite un minimum de formation.

### Exposé

L'invention s'intègre dans une solution matérielle ou un appareil disposant d'un écran aligné sur un capteur de position et d'un pointeur. Un couple processeur et mémoire se charge de traiter les informations de position du pointeur et de le traiter comme l'instrument de pointage : ces éléments permettent la détermination d'un caractère ou d'une commande à saisir. Selon les disponibilités de la solution matérielle, la transmission de la saisie peut se faire sur un lien filaire ou sans fil avec un autre appareil, à chaque lettre ou commande saisie ou par flot d'un texte saisi sur la solution matérielle.

Le procédé de sélection d'éléments parmi un groupe d'éléments affichable sur un écran de petite surface de saisie de terminal mobile (du type téléphone portable, montre connectée ou tablette tactile) est caractérisé en ce qu'il comporte un système d'affichage et de pointage et des zones dites de saisie affichables constituées de deux parties, l'une strictement incluse dans l'autre : la première centrale, dite zone centrale servant de point de démarrage et de validation lors de leur pointage, la seconde périphérique entourant complètement la zone centrale, scindée en sous parties telles que chaque partie n'a au plus que deux autres de ces parties voisines et que ces parties soient toutes mitoyennes de la zone centrale et sélectionnables exclusivement unitairement par pointage, elles sont dites zone de validation et contiennent les éléments ou groupes d'éléments à sélectionner; et en ce qu'il comporte les étapes suivantes:
- Activation de l'invention : il y a répartition des zones de saisie sur l'écran et affectation des éléments ou groupe d'éléments aux zones de saisie selon une configuration de base prédéfinie.
- Choix d'une zone de saisie par pointage de sa zone centrale : l'instrument de pointage prend contact avec l'écran sur la zone centrale.
- Choix d'une zone de validation de la zone de saisie choisie par pointage : l'instrument de pointage glisse de la zone centrale à une zone de validation.
- Validation de la dernière zone de validation choisie est dite alors validée par pointage d'une zone centrale toujours en faisant glisser l'instrument de pointage. Si la zone centrale pointée est en dehors de la zone de saisie choisie, les autres zones de validations restent transparentes - comme inexistantes - à l'instrument de pointage.
- Si la zone de validation validée contenait un groupe d'éléments, alors ce groupe d'éléments est scindé et réparti sur les zones de validations de la zone de saisie dernièrement pointée en sa zone centrale. Excepté la zone de saisie pointée en sa zone centrale, toutes les autres zones de saisie retrouvent leur configuration de base à l'activation de l'invention. Il y a ensuite poursuite de la saisie à l'étape du choix d'une zone de validation si l'instrument de pointage est toujours en contact avec l'écran en utilisant la dernière zone de saisie pointée comme la zone de saisie choisie.
- Si la zone de validation validée contenait un élément unique, alors cet élément est évalué pour action ou saisie de caractère. Toutes les zones de saisie retrouvent leur configuration de base à l'activation de l'invention. Il y a ensuite poursuite de la saisie à l'étape du choix d'une zone de validation si l'instrument de pointage est toujours en contact avec l'écran en utilisant la dernière zone de saisie pointée comme la zone de saisie choisie. On peut alors saisir un nouvel élément sans lever l'instrument de pointage.
- Lors de la rupture du contact avec l'écran de l'instrument de pointage, si aucune zone de validation n'a été choisie par pointage rien n'est sélectionné; si une zone de validation contenant un élément unique a été choisie par pointage alors cet élément est évalué pour action ou saisie; si une zone de validation contenant un groupe d'éléments a été choisie par pointage alors ce groupe d'élément est scindé et réparti sur les zones de validation de la zone de saisie choisie pour une durée paramétrable ou si la durée n'est pas échue et que l'instrument de pointage a repris contact avec l'écran jusqu'à la rupture du contact ou validation d'une zone de validation par pointage d'une zone centrale. En fin de gestion de rupture de contact toutes les zones de saisie retrouvent leur configuration de base.

L'évaluation de l'élément se traduit par la transmission d'un caractère où d'une commande à une application via un lien filaire ou sans fil ou mécanisme d'échange en mémoire ou tout autre moyen. À noter que l'application cible de l'évaluation de l'élément peut être le gestionnaire d'association des éléments ou groupe d'éléments aux zones de validation en vue de les réorganiser. Cette réorganisation est notamment la fonctionnalité de la touche majuscule d'une machine à écrire.

Ainsi pointer une zone centrale d'une zone de saisie sélectionne les zones de validations possibles (exclusivement celles de la zone de saisie pointée) et une fois le choix de la zone de validation effectuée, elle est validée en rejoignant une des zones centrales disponibles à l'écran après être sortie de la zone de saisie pointée à l'origine.

Ce procédé de sélection d'éléments parmi un groupe d'éléments est caractérisé en ce que si l'instrument de pointage prend contact avec l'écran en dehors d'une zone de saisie, glisse sur plusieurs zones de validation, alors sur préférence la première ou la dernière zone de validation pointée quand l'instrument de pointage pointera une zone centrale ou rompra le contact avec l'écran sera considérée comme la zone de validation choisie et validée et la zone de saisie choisie la zone de saisie incluant la zone de validation choisie. Par ailleurs si l'instrument de pointage prend contact avec l'écran dans une zone de validation alors la zone de saisie à qui elle est associée est la zone de saisie choisie et la zone de validation pointée la zone de validation choisie. La validation étant faite comme décrit ci-avant.

Ce procédé de sélection d'éléments parmi un groupe d'éléments est caractérisé en ce que si l'instrument de pointage prend contact avec l'écran en zone de validation, puis glisse sur d'autres zones de validation avant d'entrer dans une zone centrale, alors les éléments et groupes d'éléments ou sur option seulement le contenu de la première zone de saisie servent de paramètres à l'élément contenu dans la dernière zone de validation, considérée zone de validation choisie et validée, lors de l'évaluation de ce dernier avec en zone de saisie choisie la zone de saisie qui inclut la zone de validation choisie.

Ce procédé de sélection d'éléments parmi un groupe d'éléments est caractérisé en ce que la zone centrale d'une zone de saisie peut optionnellement contenir un élément ou une liste d'éléments sélectionnables indexés concomitamment en passant par zéro appelé liste. La sélection suivie de l'évaluation est faite par simple appui puis relâche de l'instrument de pointage sur cette zone centrale si l'élément est unique ou celui à l'index zéro de la liste. Si l'instrument de pointage prend contact avec l'écran en zone de validation, appelée zone primaire de validation, ou était en zone centrale puis glisse en une zone de validation, alors dite primaire de validation, puis glisse sur une zone de validation voisine dans le sens dextrogyre ou lévogyre de la même zone de saisie qui contient la zone centrale contenant la liste, alors l'index associé à la zone centrale est incrémenté de un ou respectivement décrémenté de un si cette incrémentation ou décrémentation produit un index de la liste et ces opérations d'incrémentation ou de décrémentation d'index se poursuivent tant que l'instrument de pointage traverse les zones de validation d'une même zone de saisie et lorsque l'instrument de pointage entre en zone centrale ou rompt son contact avec l'écran, l'élément correspondant à l'index de la liste dans la zone centrale est évalué comme un élément unique. L'évaluation de l'élément unique se fait avec une zone de saisie choisie étant la zone de saisie contenant la zone centrale contenant la liste. De la même manière, que la zone centrale contienne ou non un ou des éléments, si la zone primaire de validation contient une commande dynamique qui a la capacité d'être évaluée à chaque incrémentation ou décrémentation de l'index pour transmettre ce changement à une application cible distante ou non du système, alors quelles que soient les valeurs minimum et maximum que peut avoir l'index, dès que l'instrument de pointage pointe en premier lieu, ou après avoir pointé une zone centrale, une zone primaire de validation contenant une commande dynamique, à chaque passage d'une zone de validation à une autre de la même zone de saisie, dans le sens dextrogyre ou lévogyre, la commande est évaluée avec en paramètre respectivement une incrémentation ou une décrémentation jusqu'au retour en zone centrale de l'instrument de pointage ou de sa rupture de contact avec l'écran, la commande dynamique de la zone primaire de validation qui est considérée alors zone de validation choisie et validée est alors évaluée comme un élément unique avec un paramètre de finalisation, la zone de saisie choisie est la zone de saisie associée à la zone de validation choisie.

Parmi les éléments de commandes utiles, la commande neutre ou sans effet est possible ou une commande qui compte les simples appuis puis relâches immédiats et successifs de l'instrument de pointage en zone centrale pour simuler un double appui de touche, aussi celle de changement de configuration par défaut des zones de validation, enfin des commandes n'ayant un effet que pour un temps ou un certain nombre d'évaluations d'éléments. Il est à noter que conserver au moins une zone centrale libre d'éléments sélectionnables ou présentant comme premier élément une commande neutre permet l'affichage de l'invention globalement opaque et agrandi (première phase d'affichage suite au début d'une saisie).

Ce procédé de sélection d'éléments parmi un groupe d'éléments est caractérisé en ce que la zone de saisie pointée en sa zone centrale va de façon paramétrable agrandir sa taille sur l'écran de tel sorte que les autres zones de saisies soient toujours pointables en leur zone centrale et la zone de saisie agrandie toujours complètement visible. Cet agrandissement peut favoriser l'agrandissement des zones de validation en rétrécissant la zone centrale de la zone de saisie agrandie. Jusqu'à la rupture du contact ou validation d'une zone de validation par pointage d'une zone centrale cet agrandissement est maintenu, puis retrouve sa taille d'origine.

De plus le procédé de sélection d'éléments parmi un groupe d'éléments est caractérisé en ce que l'agrandissement d'une zone de saisie peut repousser les autres zones de saisie sur le bord de l'écran ou imposer une diminution de la taille des autres zones de saisie essentiellement de leur zone périphérique de tel sorte d'être toujours pointable en leur zone centrale. A la fin de l'agrandissement de la zone de saisie, les autres zones de saisie retrouvent leurs positions et tailles d'origine. Lorsque la zone de saisie réduit sa taille autour de sa zone centrale, les zones de validation réduisent donc leur taille de façon paramétrable et possiblement jusqu'à une taille nulle.

Aussi ce procédé de sélection d'éléments parmi un groupe d'éléments est caractérisé en ce que l'agrandissement d'une zone de saisie peut être paramétré de sorte à excentrer son centre et permet d'avoir toujours à l'écran les autres zones de saisies pointables en leur zone centrale. Cela permet alors d'agrandir au plus la zone de saisie sur tout l'écran tout en la laissant complètement lisible.

L'affichage du procédé de sélection d'éléments parmi un groupe d'éléments est caractérisé en ce que l'affichage des zones de saisie peut se faire en surimpression d'une application nécessitant la saisie. Cette surimpression peut être de transparence réglable ou de couleurs contrastées en regard de l'image à l'écran recouverte.

L'affichage du procédé de sélection d'éléments parmi un groupe d'éléments est caractérisé en ce que l'affichage de l'invention en dehors de son utilisation dite de veille peut se limiter au maximum pour laisser lisible une possible application nécessitant une saisie sur laquelle l'invention va s'afficher en surimpression. Par exemple laisser simplement un masque quasiment transparent rappelant l'affichage des zones centrales. Inversement, il peut être nécessaire de laisser apparaître les zones de validations réduites graphiquement au maximum pour laisser à l'utilisateur la possibilité d'utiliser les zones de validation au premier contact de l'instrument de pointage. Par exemple ne laisser visible que le pourtour des zones de validation et laisser un trou en place de la zone centrale. Cet affichage de veille est réactivé dès que l'invention n'est pas utilisée pendant une durée paramétrable.

L'affichage agrandi du procédé de sélection d'éléments parmi un groupe d'éléments est caractérisé sur réglage par une première phase d'agrandissement de toutes les zones de validations ou d'opacification de l'apparence des zones de saisies lors du début de saisie sur la zone centrale et dans une seconde phase, lors du déplacement de l'instrument de pointage de l'agrandissement précédemment décrit de la zone de saisie.

La représentation graphique de l'invention n'est pas obligatoirement présente perpétuellement à l'écran de l'appareil de saisie et peut être activée. Exemple une saisie de l'instrument de pointage au centre de l'écran prenant fin immédiatement.

Lors de l'activation de l'invention les zones de saisie sont réparties sur toute la surface de l'écran dédiée à la saisie. Elles sont affichées en surimpression plus ou moins opaque sur le précédent affichage. Elles ont des tailles paramétrables qui dans la configuration didactique permettent une lecture du contenu des éléments des zones de validation.

Lorsque l'instrument de pointage passe sur une zone de validation pouvant être validée, son apparence change de sorte d'identifier la future zone de validation sélectionnée. Toutes les autres zones de validation de la même zone de saisie prennent une apparence identique. Exemple : une inversion vidéo ou un changement de couleur de fond pour la zone de validation du futur item sélectionné et une couleur de fond autre pour les autres zones de validation. Dans le cas d'un pointage possible de plusieurs zones de validation, les zones de validation connues comme étant exploitables par les commandes affichées dans les zones de validation peuvent conserver une apparence dédiée. Dès qu'il apparait une zone de validation validée l'ensemble des zones de validation reprennent leur apparence à l'activation de l'invention.

Le procédé de sélection d'éléments parmi un groupe d'éléments est caractérisé en ce qu'optionnellement, au cours du choix d'une zone de validation, lorsque les zones de validation des zones de saisie réduites restent visibles et que le futur item sélectionné est un groupe d'éléments, alors la zone de saisie la plus proche de la zone de validation contenant ce futur item sélectionné peut changer le contenu de ses zones de validation en regard du groupe d'éléments et reprendre son apparence d'origine dans le cas où l'instrument de pointage change de zone de validation.

Le procédé de sélection d'éléments parmi un groupe d'éléments est caractérisé en ce que l'évaluation de l'élément sélectionné peut être transmise à tout genre de périphérique connecté par un lien sans fil (par exemple du type IEEE 802.15, IEEE 802.11, ...) ou physique du type lien série (par exemple du type USB, RS232, ...). Ainsi l'invention permet de commander un périphérique lié ou se faire le clavier d'une télévision connectée par exemple ou simple télécommande universelle.

Le procédé de sélection d'éléments parmi un groupe d'éléments est caractérisé en ce qu'une zone dédiée au retour de saisie pour validation de l'utilisateur est remplie à partir d'une copie du résultat de l'évaluation de l'élément sélectionné.

Le procédé de sélection d'éléments parmi un groupe d'éléments affichable est caractérisé en ce que la répartition des éléments et groupes d'éléments sur les zones de validation se fait en fonction des langues en privilégiant les lettres, symboles et actions les plus usités sous forme d'éléments uniques dans les zones de validation des zones de saisie préférentiellement éloignées des autres zones de saisie à l'activation de l'invention et les moins usitées sous forme de groupes d'éléments dans les zones de validation des zones de saisie voisines d'une autre zone de saisie à l'activation de l'invention.

Les éléments de caractères peuvent se placer à l'activation de l'invention sur le pourtour des zones de saisie, dans les zones de validation n'ayant pas de zone de sélection en voisinage immédiat en ordre alphabétique reléguant les dernières lettres de l'alphabet si nécessaire dans une zone de validation voisine d'une zone de sélection sous la forme de groupe d'éléments.

Le procédé de sélection d'éléments parmi un groupe d'éléments est caractérisé en ce qu'optionnellement un trait suivant l'instrument de pointage peut être tracé permettant à l'utilisateur de suivre l'évolution de sa saisie.

Les éléments pour la sélection des idéogrammes peuvent commencer par un groupe d'éléments représentant le nombre de traits utilisés dans l'idéogramme pour correspondre au dictionnaire.

Les éléments pour la sélection des idéogrammes peuvent symboliser le premier trait dessiné qui correspondrait à des groupes d'éléments représentant le second trait eux-mêmes constitués des groupes d'éléments du troisième trait s'il existe et ainsi de suite jusqu'à la saisie de l'élément correspondant à l'idéogramme.

Pour des raisons de praticité, il peut être possible de faire des groupes de zones de saisie n'ayant pas d'interaction entre elles, comme la saisie avec deux instruments de pointage.

### Description de deux exemples

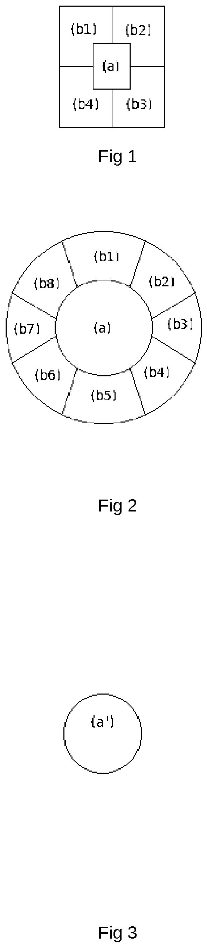

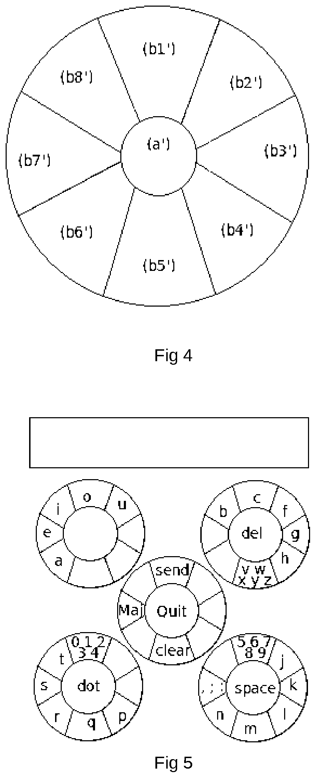

Soit pour l'exemple on considère 5 zones de saisie composées de 8 zones de validations comme montré dans l'exemple de la figure 2. La répartition des zones de saisie se fait sous la forme d'un carré, la dernière zone de saisie se trouvant au milieu des 4 autres occupant les angles d'un carré comme présenté dans la figure 5. La saisie du message «ok 1» s'opère de la façon suivante : les lettres o et k sont des éléments uniques associés à une zone de validation, l'espace est associé à une zone centrale quant au '1' il fait parti à l'activation de l'invention d'un groupe d'éléments '01234'. La figure 5 montre l'invention à son activation.

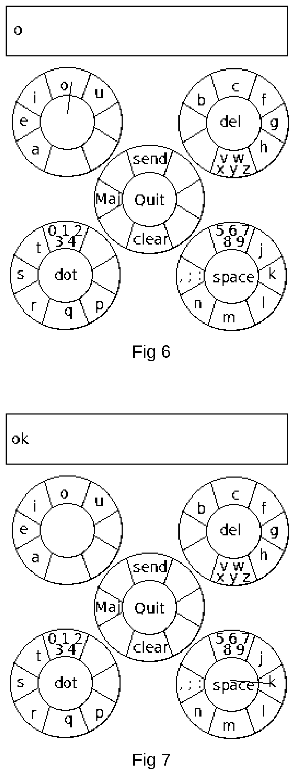

Ainsi, l'instrument de pointage pointe la zone centrale de la zone de saisie contenant la zone de validation ayant le 'o' et effectue un déplacement jusqu'en la zone de validation contenant le 'o'. À la levée de l'instrument le 'o' est saisi dans la zone de retour de saisie. Un trait sur la figure 6 montre cet exemple.

De même pour la saisie du 'k'. Un trait sur la figure 7 montre cet exemple.

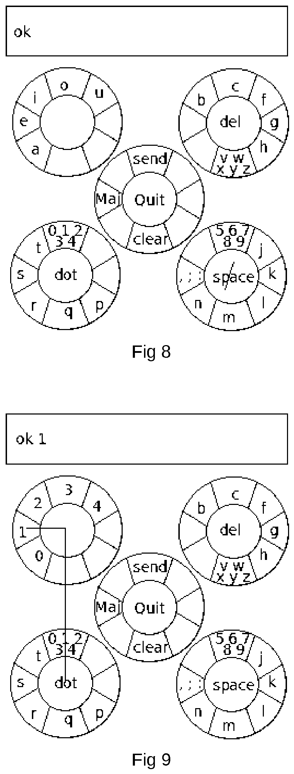

L'instrument de pointage effectue un simple touché puis relevé en zone centrale agissant comme un espace. L'espace est donc saisi. Un trait sur la figure 8 montre cet exemple.

L'instrument de pointage pointe la zone centrale de la zone de saisie contenant la zone de validation ayant le groupe d'élément '01234' et effectue un déplacement jusqu'en la zone de validation contenant le '01234'. Ensuite l'instrument de pointage continue son chemin jusqu'en zone centrale de la zone de saisie voisine dont les zones de validation ont pris pour contenu les éléments du groupe d'éléments '01234'. Ainsi l'instrument de pointage va pointer le '1' attendu. À la levée de l'instrument le '1' est saisi dans la zone de retour de saisie. Un trait sur la figure 9 montre cet exemple.

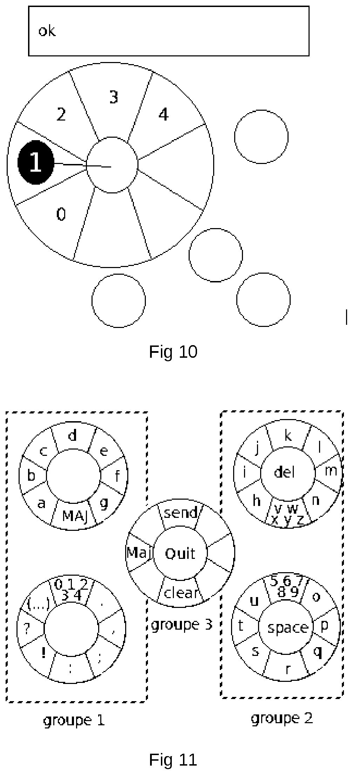

Dans le cas où le facteur d'agrandissement n'est pas nul, l'apparence de l'écran avant la levée de l'instrument de pointage pour la saisie du '1' précédent est donné par la figure 10.

Un exemple d'usage de l'invention dans le cas où les zones de saisie sont groupables est donné par la figure 11. Ceci permet la saisie avec plusieurs instruments de pointage, idéalement les doigts si la taille de l'écran le permet.

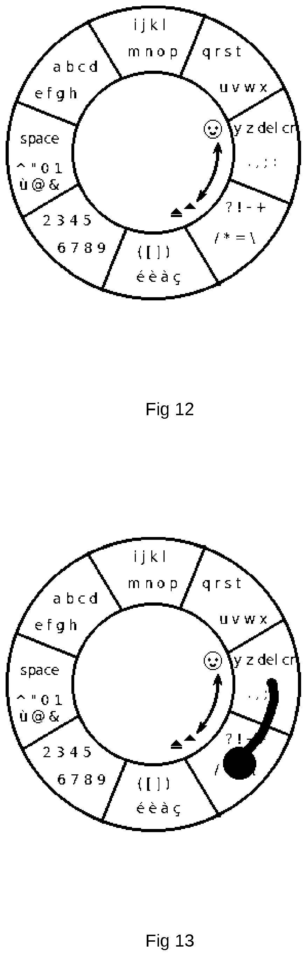

Soit pour l'exemple on considère 1 zone de saisie composée de 8 zones de validations comme montré dans l'exemple de la figure 12. La saisie du message «Bonjour» puis de son envoi à un quelconque destinataire se fait de la façon suivante :

D'abord la saisie du B majuscule se fait en utilisant la commande listée en zone centrale et représentée par un triangle simple. L'instrument de pointage commence donc sa saisie en une zone de validation, va sur sa zone de validation immédiatement dans le sens dextrogyre (Fig 13) puis se déplace en zone centrale ou rompt le contact avec l'écran. Pour la prochaine saisie d'un caractère les éléments sélectionnables seront des caractères majuscules.

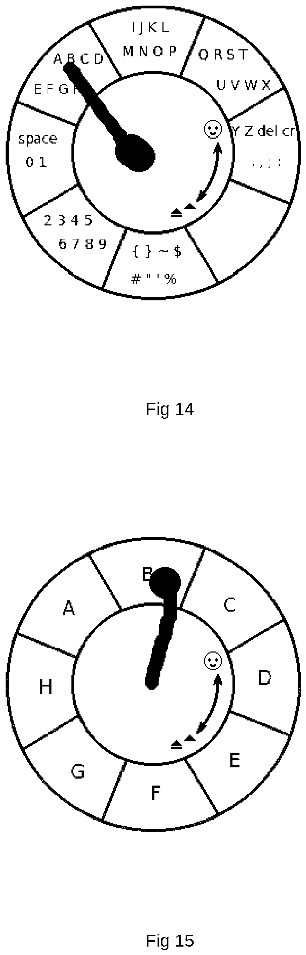

L'instrument de pointage recommence donc une saisie en une zone de validation «ABCDEFGH» se déplace en zone centrale (Fig. 14) et va ensuite en zone de validation «B» puis rompt le contact. L'élément «B» est alors saisi puis transmis à une hypothétique application sous-jacente. L'ensemble des zones de validation retrouvent leurs éléments caractères en minuscules.

Par la suite l'instrument de pointage saisit de la même manière les caractères : 'o', 'n', 'j', 'o', 'u', 'r'.

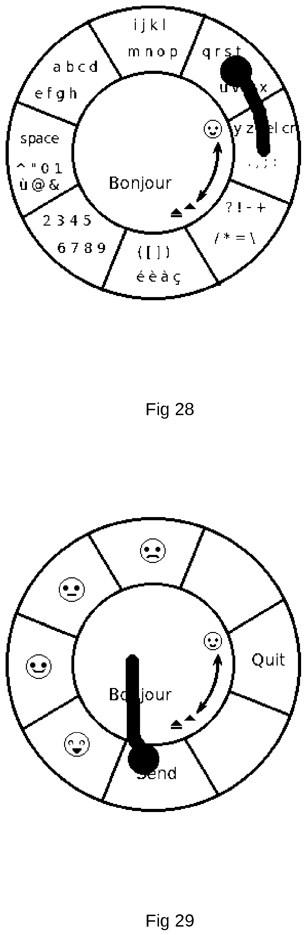

Enfin l'instrument de pointage fait une saisie dans une zone de validation, va sur sa zone de validation immédiatement dans le sens lévogyre (fig. 28) puis va en zone centrale : les éléments des zones de validation deviennent des émoticônes et des commandes à transmettre. Sans lâcher le contact avec l'écran l'instrument de pointage glisse sur la commande «Send» qui est transmise à l'application sous-jacente pour transmission du message «Bonjour».

Le procédé selon l'invention est particulièrement destiné à l'usage de saisie de caractères ou d'actions à travers l'usage d'un écran de taille réduite comme les montres

L'invention n'est pas limitée aux modes de réalisation particuliers qui ont été décrits ci-dessus, de nombreuses variantes pouvant être conçues sans sortir de la portée définie par les revendications jointes.

## Revendications

1. Dispositif pour sélectionner un élément parmi un groupe d'éléments, comprenant:
un affichage ayant un écran;
un capteur de position, l'écran étant aligné sur le capteur de position ;
un processeur; et
une mémoire stockant des instructions exécutables par le processeur,
dans lequel le processeur est configuré pour exécuter les étapes suivantes:
une étape pour afficher une pluralité de zones de saisie et une zone de retour de saisie, chaque zone de saisie comprenant une zone centrale et une zone périphérique entourant complètement la zone centrale (a), et la zone périphérique étant divisée en une pluralité de zones de validation (b1, b2, ...), chaque zone de validation contenant un élément ou une pluralité d'éléments, la pluralité de zones de validation constituant une répartition d'éléments selon une configuration de base prédéfinie;
une étape de choix d'une zone de saisie par pointage de sa zone centrale;
une étape de choix d'une zone de validation de la zone de saisie choisie par pointage, où l'instrument de pointage glisse de la zone centrale vers une zone de validation;
une étape de validation de la dernière zone de validation par pointage d'une zone centrale d'une zone de saisie en faisant glisser l'instrument de pointage, où les zones de validation des autres zones de saisie restent transparentes à l'instrument de pointage si la zone centrale pointée est en dehors de la zone de saisie choisie;
l'étape de validation de la dernière zone de validation choisie comportant les sous-étapes suivantes:
- si la zone de validation validée contient un groupe d'éléments, ce groupe d'éléments est scindé et réparti sur les zones de validation de la zone de saisie dernièrement pointée en sa zone centrale, toutes les zones de saisie retrouvant leur configuration de base à l'exception de la zone de saisie pointée en sa zone centrale; la saisie étant ensuite poursuivie à l'étape du choix d'une zone de validation si l'instrument de pointage est toujours en contact avec l'écran en utilisant la dernière zone de saisie pointée comme la zone de saisie choisie;
- si la zone de validation validée contient un élément unique, cet élément est évalué pour action ou saisie de caractère; toutes les zones de saisie retrouvant alors leur configuration de base, la saisie étant poursuivie à l'étape du choix d'une zone de validation si l'instrument de pointage est toujours en contact avec l'écran en utilisant la dernière zone de saisie pointée comme la dernière zone de saisie choisie;
une étape de gestion de rupture de contact, comprenant les sous-étapes suivantes:
- si aucune zone de validation n'a été choisie par pointage, rien n'est sélectionné;
- si une zone de validation contenant un élément unique a été choisie par pointage, cet élément est évalué pour action ou saisie;
- si une zone de validation contenant un groupe d'éléments a été choisie par pointage alors ce groupe est scindé et réparti sur les zones de validation de la zone de saisie pour une durée paramétrable;
- en fin de gestion de rupture de contact, toutes les zones de saisie retrouvant leur configuration de base.

2. Dispositif selon la revendication 1, dans lequel le processeur est configuré pour qu'en réponse au glissement de l'instrument de pointage d'une zone de validation contenant une commande associée à un incrément ou un décrément vers une zone de validation adjacente de la même zone de saisie dans une première direction, transmettre, dans la zone de retour de saisie, la commande associée à un incrément de la zone de validation, un incrément étant transmis avec la commande, en réponse au glissement de l'instrument de pointage d'une zone de validation contenant une commande associée à un incrément ou un décrément, vers une zone de validation adjacente de la même zone de saisie dans une seconde direction, transmettre, dans la zone de retour de saisie, la commande associée à un décrément de la zone de validation, un décrément étant transmis avec la commande.

3. Dispositif selon la revendication 2, dans lequel le processeur est configuré pour qu'une zone de retour de saisie pour validation de l'utilisateur soit remplie à partir d'une copie du résultat de l'évaluation de l'élément sélectionné.

4. Dispositif selon la revendication 1, dans lequel le processeur est configuré pour que la pluralité de zones de saisie soit divisée en groupes pour l'introduction d'éléments par une pluralité d'instruments de pointage.

5. Dispositif selon la revendication 1, dans lequel le processeur est configuré pour que la zone de saisie pointée en sa zone centrale agrandisse sa taille sur l'écran de telle sorte que les autres zones de saisies soient toujours pointables en leur zone centrale et la zone de saisie agrandie toujours complètement visible.

6. Procédé de sélection d'un élément parmi un groupe d'éléments dans un dispositif comprenant un capteur de position et un écran aligné sur le capteur de position, le procédé comprenant les étapes suivantes:
une étape d'affichage d'une pluralité de zones de saisie et d'une zone de retour de saisie, chaque zone de saisie comprenant une zone centrale (a) et une zone périphérique entourant complètement la zone centrale, et la zone périphérique étant divisée en une pluralité de zones de validation (b1, b2, ...), chaque zone de validation contenant un élément ou une pluralité d'éléments, la pluralité de zones de validation constituant une répartition d'éléments selon une configuration de base prédéfinie;
une étape de choix d'une zone de saisie par pointage de sa zone centrale;
une étape de choix d'une zone de validation de la zone de saisie choisie par pointage, où l'instrument de pointage glisse de la zone centrale vers une zone de validation;
une étape de validation de la dernière zone de validation par pointage d'une zone centrale d'une zone de saisie en faisant glisser l'instrument de pointage, où les zones de validation des autres zones de saisie restent transparentes à l'instrument de pointage si la zone centrale pointée est en dehors de la zone de saisie choisie;
l'étape de validation de la dernière zone de validation choisie comportant les sous-étapes suivantes:
- si la zone de validation validée contient un groupe d'éléments, ce groupe d'éléments est scindé et réparti sur les zones de validation de la zone de saisie dernièrement pointée en sa zone centrale, toutes les zones de saisie retrouvant leur configuration de base à l'exception de la zone de saisie pointée en sa zone centrale; la saisie étant ensuite poursuivie à l'étape du choix d'une zone de validation si l'instrument de pointage est toujours en contact avec l'écran en utilisant la dernière zone de saisie pointée comme la zone de saisie choisie;
- si la zone de validation validée contient un élément unique, cet élément est évalué pour action ou saisie de caractère; toutes les zones de saisie retrouvant alors leur configuration de base, la saisie étant poursuivie à l'étape du choix d'une zone de validation si l'instrument de pointage est toujours en contact avec l'écran en utilisant la dernière zone de saisie pointée comme la dernière zone de saisie choisie;
une étape de gestion de rupture de contact, comprenant les sous-étapes suivantes:
- si aucune zone de validation n'a été choisie par pointage, rien n'est sélectionné;
- si une zone de validation contenant un élément unique a été choisie par pointage, cet élément est évalué pour action ou saisie;
- si une zone de validation contenant un groupe d'éléments a été choisie par pointage alors ce groupe est scindé et réparti sur les zones de validation de la zone de saisie pour une durée paramétrable;
- en fin de gestion de rupture de contact, toutes les zones de saisie retrouvant leur configuration de base.

7. Procédé selon la revendication 6, **caractérisé en ce qu'**un élément peut être un caractère ou un nombre ou une commande.

8. Procédé selon la revendication 6, **caractérisé en ce qu'**en réponse au glissement de l'instrument de pointage d'une zone centrale à une zone de validation d'une zone de saisie contenant une commande associée à un incrément ou un décrément chaque glissement d'une zone de validation de la zone de saisie à une zone de validation adjacente de la même zone de saisie dans une première direction, transmettre, dans la zone de retour de saisie, la commande associée à un incrément de la zone de validation, un incrément étant transmis avec la commande, en réponse au glissement de l'instrument de pointage d'une zone centrale à une zone de validation d'une zone de saisie contenant une commande associée à un incrément ou un décrément chaque glissement d'une zone de validation de la zone de saisie à une zone de validation adjacente de la même zone de saisie dans une seconde direction, transmettre, dans la zone de retour de saisie, la commande associée à un décrément de la zone de validation, un décrément étant transmis avec la commande.

9. Procédé selon la revendication 6, **caractérisé en ce que** l'évaluation de l'élément se traduit par la transmission d'un caractère où d'une commande à une application.

## Patentansprüche

1. Endvorrichtung zum Auswählen eines Elements aus einer Gruppe von Elementen, umfassend:
eine Anzeige mit einem Bildschirm;
einen Positionssensor, wobei der Bildschirm mit dem Positionssensor ausgerichtet ist;
einen Prozessor; sowie einen Speicher mit vom Prozessor ausführbaren Befehlen, in dem der Prozessor konfiguriert ist, um die folgenden Schritte auszuführen:
einen Schritt
zur Anzeige einer Vielzahl von Eingabebereichen und eines Rückkehrbereichs, wobei jeder Eingabebereich einen zentralen Bereich und einen den zentralen Bereich (a) vollständig umgebenden Randbereich umfasst, und der Randbereich in eine Vielzahl von Validierungsbereichen (b1, b2, ...) unterteilt ist, wobei jeder Validierungsbereich ein Element oder eine Vielzahl von Elementen enthält und die Vielzahl von Validierungsbereichen eine Verteilung von Elementen gemäß einer vordefinierten Grundkonfiguration bildet;
einen Schritt zum Auswählen eines Eingabebereichs durch Ausrichten auf seinen zentralen Bereich;
einen Schritt zum Auswählen eines Validierungsbereichs aus dem durch Ausrichtung ausgewählten Eingabebereich, wobei das Richtinstrument vom zentralen Bereich zu einem Validierungsbereich gleitet;
einen Validierungsschritt des letzten Validierungsbereichs durch Ausrichtung auf einen zentralen Bereich eines Eingabebereichs durch Gleiten des Richtinstruments, wobei die Validierungsbereiche der anderen Eingabebereiche für das Richtinstrument transparent bleiben, wenn der angegebene zentrale Bereich außerhalb des ausgewählten Eingabebereichs liegt;
wobei der Validierungsschritt des zuletzt ausgewählten Validierungsbereichs die folgenden Teilschritte umfasst:
- wenn der validierte Validierungsbereich eine Gruppe von Elementen enthält, wird diese Gruppe von Elementen aufgeteilt und auf die Validierungsbereiche des Eingabebereichs verteilt, auf das in seinem zentralen Bereich zuletzt gezeigt wurde, wobei alle Eingabebereiche mit Ausnahme des Eingabebereichs, auf das in seinem zentralen Bereich gezeigt wurde, in ihre Grundkonfiguration zurückgesetzt werden; die Eingabe wird dann bei der Auswahl eines Validierungsbereichs fortgesetzt, wenn das Richtinstrument noch Kontakt mit dem Bildschirm hat, wobei das letzte Eingabefeld, auf das als gewähltes Eingabefeld gezeigt wurde, verwendet wird;
- wenn der validierte Validierungsbereich ein einzelnes Element enthält, wird dieses Element für die Aktions- oder Zeicheneingabe ausgewertet; alle Eingabefelder werden dann wieder in ihre Grundkonfiguration zurückgesetzt, wobei die Eingabe bei der Auswahl eines Validierungsbereichs fortgesetzt wird, wenn das Richtinstrument noch Kontakt mit dem Bildschirm hat, wobei das zuletzt angezeigte Eingabefeld als zuletzt ausgewähltes Eingabefeld verwendet wird;
einen Schritt zum Verwalten der Kontaktunterbrechung, der die folgenden Teilschritte umfasst:
- wenn kein Validierungsbereich durch Ausrichtung ausgewählt wurde, wird nichts ausgewählt;
- wenn ein Validierungsbereich mit einem einzelnen Element durch Ausrichtung ausgewählt wurde, wird dieses Element auf Aktion oder Eingabe bewertet;
- wenn ein Validierungsbereich mit einer Gruppe von Elementen durch Ausrichtung ausgewählt wurde, wird diese Gruppe aufgeteilt und für eine konfigurierbare Dauer auf die Validierungsbereiche des Eingabebereichs verteilt;
- am Ende der Verwaltung der Kontaktunterbrechung werden alle Eingabebereiche in ihre Grundkonfiguration zurückgesetzt.

2. Vorrichtung nach Anspruch 1, wobei der Prozessor so konfiguriert ist, dass er als Reaktion auf das Gleiten des Richtinstruments von einem Validierungsbereich, der einen einem Inkrement oder Dekrement zugeordneten Befehl enthält, zu einem benachbarten Validierungsbereich desselben Eingangsbereichs in einer ersten Richtung gleitet und in dem Rückkehrbereich den einem Inkrement des Validierungsbereichs zugeordneten Befehl überträgt, wobei ein Inkrement mit dem Befehl
als Reaktion auf das Gleiten des Richtgeräts von einem Validierungsbereich, der einen einem Inkrement oder Dekrement zugeordneten Befehl enthält, in einen benachbarten Validierungsbereich desselben Eingabebereichs in einer zweiten Richtung in den Rückkehrbereich und ein Dekrement mit dem Befehl übertragen wird.

3. Vorrichtung nach Anspruch 2, wobei der Prozessor so konfiguriert ist, dass ein Rückkehrbereich zur Validierung des Benutzers aus einer Kopie des Bewertungsergebnisses des ausgewählten Elements gefüllt wird.

4. Vorrichtung nach Anspruch 1, wobei der Prozessor so konfiguriert ist, dass die Vielzahl von Eingabebereichen zur Einführung von Elementen durch mehrere Richtinstrumente in Gruppen unterteilt ist.

5. Vorrichtung nach Anspruch 1, wobei der Prozessor so konfiguriert ist, dass der Eingabebereich, auf den in seinem zentralen Bereich gezeigt wird, seine Größe auf dem Bildschirm so vergrößert, dass die anderen Eingabebereiche immer in ihrem zentralen Bereich gezeigt werden und der vergrößerte Eingabebereich immer vollständig sichtbar ist.

6. Verfahren zum Auswählen eines Elements aus einer Gruppe von Elementen in einer Vorrichtung, die einen Positionssensor und einen mit dem Positionssensor ausgerichteten Bildschirm umfasst, wobei das Verfahren die folgenden Schritte umfasst:
einen Schritt zum Anzeigen mehrerer Eingabebereiche und eines Rückkehrbereichs, wobei jeder Eingabebereich einen zentralen Bereich (a) und einen den zentralen Bereich vollständig umgebenden peripheren Bereich umfasst und der periphere Bereich in mehreren Validierungsbereiche (b1, b2, ...) unterteilt ist, wobei jeder Validierungsbereich ein Element oder mehrere Elemente enthält und die mehreren Validierungsbereiche eine Verteilung von Elementen gemäß einer vordefinierten Grundkonfiguration bilden;
einen Schritt zum Auswählen eines Eingabebereichs durch Ausrichten auf seinen zentralen Bereich;
einen Schritt zum Auswählen eines Validierungsbereichs aus dem durch Ausrichtung ausgewählten Eingabebereich, wobei das Richtinstrument vom zentralen Bereich zu einem Validierungsbereich gleitet;
einen Validierungsschritt des letzten Validierungsbereichs durch Ausrichtung auf einen zentralen Bereich eines Eingabebereichs durch Gleiten des Richtinstruments, wobei die Validierungsbereiche der anderen Eingabebereiche für das Richtinstrument transparent bleiben, wenn der angegebene zentrale Bereich außerhalb des ausgewählten Eingabebereichs liegt;
wobei der Validierungsschritt des zuletzt ausgewählten Validierungsbereichs die folgenden Teilschritte umfasst:
- wenn der validierte Validierungsbereich eine Gruppe von Elementen enthält, wird diese Gruppe von Elementen aufgeteilt und auf die Validierungsbereiche des Eingabebereichs verteilt, auf das in seinem zentralen Bereich zuletzt gezeigt wurde, wobei alle Eingabebereiche mit Ausnahme des Eingabebereichs, auf das in seinem zentralen Bereich gezeigt wurde, in ihre Grundkonfiguration zurückgesetzt werden; die Eingabe wird dann bei der Auswahl eines Validierungsbereichs fortgesetzt, wenn das Richtinstrument noch Kontakt mit dem Bildschirm hat, wobei das letzte Eingabefeld, auf das als gewähltes Eingabefeld gezeigt wurde, verwendet wird;
- wenn der validierte Validierungsbereich ein einzelnes Element enthält, wird dieses Element für die Aktions- oder Zeicheneingabe ausgewertet; alle Eingabefelder werden dann wieder in ihre Grundkonfiguration zurückgesetzt, wobei die Eingabe bei der Auswahl eines Validierungsbereichs fortgesetzt wird, wenn das Richtinstrument noch Kontakt mit dem Bildschirm hat, wobei das zuletzt angezeigte Eingabefeld als zuletzt ausgewähltes Eingabefeld verwendet wird;
einen Schritt zum Verwalten der Kontaktunterbrechung, der die folgenden Teilschritte umfasst:
- wenn kein Validierungsbereich durch Ausrichtung ausgewählt wurde, wird nichts ausgewählt;
- wenn ein Validierungsbereich mit einem einzelnen Element durch Ausrichtung ausgewählt wurde, wird dieses Element auf Aktion oder Eingabe bewertet;
- wenn ein Validierungsbereich mit einer Gruppe von Elementen durch Ausrichtung ausgewählt wurde, wird diese Gruppe aufgeteilt und für eine konfigurierbare Dauer auf die Validierungsbereiche des Eingabebereichs verteilt;
- am Ende der Verwaltung der Kontaktunterbrechung werden alle Eingabebereiche in ihre Grundkonfiguration zurückgesetzt.

7. Verfahren nach Anspruch 6, **dadurch gekennzeichnet, dass** ein Element ein Zeichen oder eine Zahl oder ein Befehl sein kann.

8. Verfahren nach Anspruch 6, **dadurch gekennzeichnet, dass** als Reaktion auf das Gleiten des Richtinstruments von einem zentralen Bereich zu einem Validierungsbereich eines Eingabebereichs, der einen einem Inkrement oder Dekrement zugeordneten Befehl enthält, mit jedem Gleiten von einem Validierungsbereich des Eingabebereichs zu einem benachbarten Validierungsbereich desselben Eingabebereichs in einer ersten Richtung in den Rückkehrbereich, einen einem Inkrement des Validierungsbereichs zugeordneten Befehl überträgt und jedes Inkrement mit dem Befehl
als Reaktion auf das Gleiten des Richtinstruments von einem zentralen Bereich zu einem Validierungsbereich einer Eingabezone übertragen wird, die wiederum einen einem Inkrement oder Dekrement zugeordneten Befehl enthält, und mit jedem Gleiten von einem Validierungsbereich des Eingabebereichs zu einem benachbarten Validierungsbereich desselben Eingabebereichs in einer zweiten Richtung in den Rückkehrbereich den einem Dekrement des Validierungsbereichs zugeordneten Befehl überträgt und jedes Dekrement mit dem Befehl übertragen wird.

9. Verfahren nach Anspruch 6, **dadurch gekennzeichnet, dass** sich die Auswertung des Elements zur Übertragung eines Zeichens oder eines Befehls an eine Anwendung äußert.

## Claims

1. A terminal device for selecting an element among a group of elements, comprising:
a display having a screen;
a position sensor, the screen being aligned with the position sensor;
a processor; and a memory storing instructions executable by the processor, wherein the processor is configured to perform the following steps:
a step
for displaying a plurality of input areas and an input return area, each input area comprising a central area and a peripheral area completely surrounding the central area (a), and the peripheral area being divided into a plurality of validation areas (b1, b2, ...), each validation area containing one element or a plurality of elements, the plurality of validation areas constituting a distribution of elements according to a predefined basic configuration;
a step of choosing an input field by pointing to its central area;
a step of choosing a validation area from the input area chosen by pointing, wherein the pointing instrument slides from the central area to a validation area;
a step of validating the last pointing validation area of a central area of an input area by sliding the pointing instrument, wherein the validation areas of the other input areas remain transparent to the pointing instrument if the central area pointed to is outside the selected input area;
the step of validating the last selected validation field comprising the following sub-steps:
- if the validated validation field contains a group of elements, this group of elements is split up and distributed over the validation fields of the input field last pointed to in its central area, all the input fields returning to their basic configuration except for the input field pointed to in its central area; the input then being continued in the step of choosing a validation field if the pointing instrument is still in contact with the screen by using the last pointed input field as the chosen input field;
- if the validated validation field contains a single element, this element is evaluated for action or character input; all input fields are then returned to their basic configuration, input being continued at the step of selecting a validation field if the pointing instrument is still in contact with the screen using the last input field pointed to as the last selected input field;
a contact break management step, comprising the following sub-steps:
- if no validation field has been selected by pointing, nothing is selected;
- if a validation field containing a single element has been selected by pointing, that element is evaluated for action or input;
- if a validation field containing a group of elements has been selected by pointing, then this group is split up and distributed over the validation fields of the input area for a parameterizable duration;
- at the end of contact break management, all input fields are returned to their basic configuration.

2. The terminal device according to claim 1, wherein the processor is configured to, in response to the pointing instrument sliding from a validation area containing a command associated with an increment or decrement to an adjacent validation area of the same input area in a first direction, transmit, in the input return area, the command associated with an increment of the validation area, an increment being transmitted with the command,
in response to the pointing instrument dragging from a validation field containing a command associated with an increment or a decrement to an adjacent validation field of the same input field in a second direction, transmitting, in the input return area, the command associated with a decrement of the validation area, a decrement being transmitted with the command.

3. The terminal device according to claim 2, wherein the processor is configured so that an input return area for user validation is filled from a copy of the evaluation result of the selected element.

4. The terminal device according to claim 1, wherein the processor is configured so that the plurality of input fields are divided into groups for inputting elements by a plurality of pointing instruments.

5. The terminal device according to claim 1, wherein the processor is configured so that the input area pointed to in its central area enlarges its size on the screen such that the other input areas are always pointable in their central area and the enlarged input area is always fully visible.

6. Process of selecting an element from among group of elements in a device comprising a position sensor and a screen aligned with the position sensor, the method comprising the following steps:
a step of displaying a plurality of input areas and an input return area, each input area comprising a central area (a) and a peripheral area completely surrounding the central area, and the peripheral area being divided into a plurality of validation areas (b1, b2, ...), each validation area containing one element or a plurality of elements, the plurality of validation areas constituting a distribution of elements according to a predefined basic configuration;
a step of choosing an input field by pointing to its central area;
a step of choosing a validation area from the input area chosen by pointing, wherein the pointing instrument slides from the central area to a validation area;
a step of validating the last pointing validation area of a central area of an input area by sliding the pointing instrument, wherein the validation areas of the other input areas remain transparent to the pointing instrument if the central area pointed to is outside the selected input area;
the step of validating the last selected validation field comprising the following sub-steps:
- if the validated validation field contains a group of elements, this group of elements is split up and distributed over the validation fields of the input field last pointed to in its central area, all the input fields returning to their basic configuration except for the input field pointed to in its central area; the input then being continued in the step of choosing a validation field if the pointing instrument is still in contact with the screen by using the last pointed input field as the chosen input field;
- if the validated validation field contains a single element, this element is evaluated for action or character input; all input fields are then returned to their basic configuration, input being continued at the step of selecting a validation field if the pointing instrument is still in contact with the screen using the last input field pointed to as the last selected input field;
a contact break management step, comprising the following sub-steps:
- if no validation field has been selected by pointing, nothing is selected;
- if a validation field containing a single element has been selected by pointing, that element is evaluated for action or input;
- if a validation field containing a group of elements has been selected by pointing, then this group is split up and distributed over the validation fields of the input area for a parameterizable duration;
- at the end of contact break management, all input fields are returned to their basic configuration.

7. Process according to claim 6, **characterized in that** an element can be a character or a number or a command.

8. Process according to claim 6, **characterized in that** in response to the pointing instrument sliding from a central area to a validation area of an input area containing a command associated with an increment or a decrement each sliding from a validation area of the input area to an adjacent validation area of the same input area in a first direction, transmitting, in the input return area, the command associated with an increment of the validation area, an increment being transmitted with the command,
in response to the pointing instrument sliding from a central area to a validation area of an input area containing a command associated with an increment or a decrement each sliding from a validation area of the input area to an adjacent validation area of the same input area in a second direction, transmitting, in the input return area, the command associated with a decrement of the validation area, a decrement being transmitted with the command.

9. Process according to claim 6, **characterized in that** the evaluation of the element results in the transmission of a character or a command to an application.
